(19) **Europäisches Patentamt** / **European Patent Office** / **Office européen des brevets**

(11) **EP 3 803 452 B1**

(12) **FASCICULE DE BREVET EUROPEEN**

(45) Date de publication et mention de la délivrance du brevet:
**15.06.2022 Bulletin 2022/24**

(21) Numéro de dépôt: **19742830.3**

(22) Date de dépôt: **24.05.2019**

(51) Classification Internationale des Brevets (IPC):
**G01S 13/75** (2006.01)  **H01Q 3/44** (2006.01)
**H04B 17/30** (2015.01)

(52) Classification Coopérative des Brevets (CPC):
**G01S 13/75; H04B 17/102; H04B 17/103; H04B 17/27;** H01Q 3/44

(86) Numéro de dépôt international:
**PCT/FR2019/051211**

(87) Numéro de publication internationale:
**WO 2019/224503 (28.11.2019 Gazette 2019/48)**

(54) **PROCÉDÉ DE DÉTERMINATION D'UNE CARACTÉRISTIQUE D'UN RÉCEPTEUR DANS UN MILIEU, ET SYSTÈME METTANT EN OEUVRE CE PROCÉDÉ**

VERFAHREN ZUR BESTIMMUNG EINER CHARAKTERISTIK EINES EMPFÄNGERS IN EINEM MEDIUM UND SYSTEM ZUR IMPLEMENTIERUNG DIESES VERFAHRENS

METHOD FOR DETERMINING A CHARACTERISTIC OF A RECEIVER IN A MEDIUM AND SYSTEM IMPLEMENTING THIS METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.05.2018 FR 1854469**

(43) Date de publication de la demande:
**14.04.2021 Bulletin 2021/15**

(73) Titulaires:
- **Greenerwave**
  **06560 Valbonne (FR)**
- **CENTRE NATIONAL DE LA RECHERCHE SCIENTIFIQUE -CNRS-**
  **75016 Paris (FR)**
- **Ecole Supérieure de Physique et de Chimie Industrielles de la Ville de Paris**
  **75005 Paris (FR)**

(72) Inventeurs:
- **LEROSEY, Geoffroy**
  **75015 Paris (FR)**
- **DEL HOUGNE, Philipp**
  **75014 Paris (FR)**
- **FINK, Mathias**
  **92190 Meudon (FR)**
- **AUBRY, Alexandre**
  **94200 Ivry Sur Seine (FR)**

(74) Mandataire: **Plasseraud IP**
  **66, rue de la Chaussée d'Antin**
  **75440 Paris Cedex 09 (FR)**

(56) Documents cités:
**WO-A1-2015/039769    US-A1- 2004 263 408**

- **BARROS MICHAEL TAYNNAN ET AL: "Integrated Terahertz Communication With Reflectors for 5G Small-Cell Networks", IEEE TRANSACTIONS ON VEHICULAR TECHNOLOGY, IEEE SERVICE CENTER, PISCATAWAY, NJ, US, vol. 66, no. 7, 1 juillet 2017 (2017-07-01), pages 5647-5657, XP011656389, ISSN: 0018-9545, DOI: 10.1109/TVT.2016.2639326 [extrait le 2017-07-14]**
- **HIROKAZU SAWADA ET AL: "Disconnection Probability Improvement by Using Artificial Multi Reflectors for Millimeter-Wave Indoor Wireless Communications", IEEE TRANSACTIONS ON ANTENNAS AND PROPAGATION, IEEE SERVICE CENTER, PISCATAWAY, NJ, US, vol. 61, no. 4, 1 avril 2013 (2013-04-01), pages 1868-1875, XP011499251, ISSN: 0018-926X, DOI: 10.1109/TAP.2013.2243096**

EP 3 803 452 B1

**EP 3 803 452 B1**

**Description**

**DOMAINE TECHNIQUE**

La présente invention est relative à un procédé et système de détermination d'une caractéristique d'un récepteur dans un milieu, ladite caractéristique étant une information de détection et/ou une information d'identité et/ou une information de localisation dudit récepteur.

**ETAT DE LA TECHNIQUE ANTERIEURE**

Plus particulièrement, l'invention concerne un procédé de détection, identification ou localisation d'un récepteur par propagation d'ondes dans le milieu.
De nombreux procédés existent pour ces applications.
Par exemple selon une première technique pour la détection / localisation d'un objet dans un milieu, on utilise habituellement un réseau d'antennes qui balaie l'espace du milieu soit par rotation mécanique d'une antenne à faisceau directif, soit par inclinaison du faisceau par ajustement de lois de retard sur une pluralité d'éléments d'antenne (technique de formation de voie). En outre, la localisation de l'objet est effectuée par l'antenne en réception, en estimant l'angle d'arrivée et le temps de vol d'une onde secondaire réfléchie par l'objet suite à son illumination par l'onde primaire émise.
Cependant ce type de technique de radar est peu efficace dans un milieu complexe comprenant des réverbérations, et notamment en intérieur d'un bâtiment, à cause des chemins multiples entre l'antenne du radar et l'objet à détecter, localiser et/ou identifier l'objet dans le milieu.
Par exemple selon une seconde technique pour la détection / localisation d'un objet dans un milieu, on utilise une base de données de signatures de la présence de l'objet en une grande multitude de lieux du milieu, et on émet une onde primaire qui est réfléchie par l'objet en une onde secondaire, et on compare un signal reçu enregistré de l'onde secondaire à toutes les signatures de la base de données pour déterminer celle ayant la plus grande ressemblance pour détecter, localiser et/ou identifier l'objet dans le milieu.
Cependant, ce type de technique reste complexe car elle nécessite souvent l'enregistrement d'un signal temporellement long qui comprend un grand nombre de fréquences pour assurer une comparaison fiable. Malgré ce lourd apprentissage, cette technique est sensible aux variations du milieu et à l'imprécision des signatures préenregistrées.

**EXPOSE DE L'INVENTION**

La présente invention a pour but de proposer **un procédé** de détection et/ou localisation et/ou identification d'un récepteur dans un milieu, par propagation d'ondes, qui soit plus efficace et plus fiable.
A cet effet, le procédé est mis en œuvre par un système comprenant :

- une antenne adaptée pour émettre une onde primaire dans le milieu, et pour recevoir une onde secondaire résultante de l'onde primaire et de la présence du récepteur dans le milieu,
- une pluralité d'éléments réglables ayant une impédance qui peut être modifiée pour modifier la manière dont l'onde primaire est émise et/ou réfléchie et/ou transmise, et
- un contrôleur relié à l'antenne et aux éléments réglables et qui contrôle l'état des éléments réglables à partir d'un jeu de paramètres.

En outre, le récepteur est adapté pour émettre activement l'onde secondaire en réponse de la réception de l'onde primaire.
Le procédé **est caractérisé en ce que** le système :

a) fait émettre une onde primaire par l'antenne,
b) contrôle les éléments réglables durant au moins une période de sondage, successivement avec une pluralité de jeux de paramètres, chaque jeu de paramètres étant différent du précédent, afin de modifier la propagation de l'onde primaire et/ou de l'onde secondaire pendant l'émission et/ou la réception des ondes par l'antenne,
c) enregistre des signaux reçus par l'antenne pendant ladite période de sondage, et
d) détermine la caractéristique du récepteur dans le milieu à partir des signaux reçus pour chaque jeu de paramètres.

Grâce à la pluralité d'élément réglables et leur contrôle successivement avec une pluralité de jeux de paramètres, le procédé permet d'obtenir une même pluralité de signaux reçus du récepteur, ces signaux comprenant une grande richesse pour la détection, localisation et/ou identification du récepteur dans le milieu.
Ce procédé est plus simple que les techniques de réseau d'antennes et plus précis que les techniques de détection par signature, car la pluralité d'expériences avec des paramètres différents permet de multiples observations différentes du récepteur dans le milieu.

Dans divers modes de réalisation du procédé selon l'invention, on peut éventuellement avoir recours en outre à l'une et/ou à l'autre des dispositions suivantes.

Selon un aspect, le contrôleur calcule une moyenne des signaux reçus ou une moyenne de quantités calculées à partir des signaux reçus pour déterminer la caractéristique du récepteur.

Selon un aspect, la pluralité de jeux de paramètres est une séquence aléatoire.

Selon un aspect, la pluralité de jeux de paramètres est une séquence préenregistrée.

Selon un aspect, la pluralité de jeux de paramètres est une séquence qui modifie un faible nombre des éléments réglables à la fois, ledit faible nombre étant inférieur à 10% des éléments réglables du système, et le contrôleur détermine la caractéristique à partir des signaux enregistrés de plus forte amplitude, et de la connaissance des positions des éléments réglables ayant provoqués cette plus forte amplitude.

Selon un aspect, le contrôle des éléments réglables est effectué à une cadence supérieure à une cadence limite, par exemple de 10 par secondes.

Selon un aspect, le contrôleur compare les signaux reçus pour la pluralité de jeux de paramètres avec une base de données mémorisée de signaux prédéterminés, ladite base de de donnée incluant la caractéristique du récepteur en association aux signaux prédéterminés.

Selon un aspect, les signaux prédéterminés comprennent une seule fréquence.

Selon un aspect, le système comprend en outre des récepteurs de référence de caractéristique prédéterminée, et dans lequel le contrôleur compare les signaux reçus pour la pluralité de jeux de paramètres avec une base de données mémorisée de signaux prédéterminés pour ces récepteurs de référence, ladite base de de données incluant la caractéristique prédéterminée de chaque récepteur de référence en association au signal prédéterminé pour ce récepteur de référence, et la caractéristique du récepteur est déterminée en déterminant la comparaison de plus grande vraisemblance entre les signaux reçus et les signaux prédéterminés des récepteurs de référence.

Selon un aspect, on met à jour périodiquement les signaux prédéterminés des récepteurs de référence.

Selon un aspect, le contrôleur comprend une logique de commande de l'antenne et/ou des éléments réglables pour que l'onde primaire soit focalisée autour d'un ou plusieurs récepteurs de référence, et on focalise l'onde primaire autour dudit récepteur de référence avant d'effectuer les étapes a) à d).

Selon un aspect, les signaux reçus des récepteurs de référence sont mesurés périodiquement avec la pluralité de jeux de paramètres, et seuls les signaux reçus les plus cohérents sont conservés dans la base de données.

Selon un aspect, le contrôleur utilise au moins une donnée incluse par le récepteur dans chacun des signaux reçus, ladite donnée correspondant au niveau et/ou à la qualité et/ou à l'estimation de la fonction de transfert du canal de propagation entre l'antenne et le récepteur.

Selon un aspect :

- la pluralité de jeux de paramètres pour les éléments réglables comprend un premier jeu de paramètres et un second jeu de paramètres, le second jeu de paramètre correspondant à une phase décalée de $\pi$ radians par rapport au premier jeu de paramètres,
- le contrôleur décode dans les signaux reçus une première donnée correspondant au premier jeu de paramètres et une seconde donnée correspondant au second jeu de paramètres, la première et la seconde données correspondant au niveau de l'onde reçu par le récepteur, et
- la caractéristique du récepteur est déterminée à partir d'une première grandeur de calcul $\psi_1$ qui est la différence entre la seconde donnée et la première donnée, c'est-à-dire :

$$\psi_1 = (I_2 - I_1)$$

où

$\psi_1$ est la première grandeur de calcul, et
$I_1$ et $I_2$ sont respectivement la première donnée et la seconde donnée.

Selon un aspect :

- la pluralité de jeux de paramètres pour les éléments réglables comprend un premier jeu de paramètres, un second jeu de paramètres, un troisième jeu de paramètres, un quatrième jeu de paramètres, le second jeu de paramètre correspondant à une phase décalée de $\pi/2$ radians par rapport au premier jeu de paramètres, le troisième jeu de paramètre correspondant à une phase décalée de $\pi$ radians par rapport au premier jeu de paramètres, et le quatrième jeu de paramètre correspondant à une phase décalée de $3.\pi/2$ radians par rapport au premier jeu de paramètres,
- le contrôleur décode dans les signaux reçus une première donnée correspondant au premier jeu de paramètres, une seconde donnée correspondant au second jeu de paramètres, une troisième donnée correspondant au troisième jeu de paramètres, et une quatrième donnée correspondant au quatrième jeu de paramètres, la première, la seconde, la troisième et la quatrième donnée correspondant au niveau de l'onde reçu par le récepteur, et
- la caractéristique du récepteur est déterminée à partir d'une deuxième grandeur de calcul $\psi_2$ suivante :

$$\psi_2 = (I_3 - I_1) + i(I_4 - I_2)$$

où

$\psi_2$ est la deuxième grandeur de calcul, et
$I_1$, $I_2$, $I_3$ et $I_4$ sont respectivement la première donnée, la seconde donnée, la troisième donnée, et la quatrième donnée, et
$i$ est le nombre d'unité imaginaire.

Selon un aspect :

- le contrôleur décode dans les signaux reçus une donnée correspondant à l'estimation de la fonction de transfert du canal de propagation entre l'antenne et le récepteur, et
- la caractéristique du récepteur est déterminée à partir d'une troisième grandeur de calcul $m(\omega)$ suivante :

$$m(\omega) = \frac{dA}{d\omega} A^*(\omega)$$

où

$m(\omega)$ est la troisième grandeur de calcul,
$A(\omega)$ est la fonction de transfert en fonction de la pulsation fréquentielle $\omega$,
$d()/d\omega$ est l'opérateur de dérivé par rapport à la pulsation fréquentielle, et
$()^*$ est l'opérateur de conjugaison des nombres complexe.

Selon un aspect, la caractéristique du récepteur est déterminée à partir d'une moyenne ou d'un produit scalaire ou d'une combinaison ou d'une fonction de plusieurs grandeurs de calcul, lesdites grandeurs de calcul étant des premières grandeurs de calcul ou des deuxièmes grandeurs de calcul ou des troisièmes grandeurs de calcul.
La présente invention a pour but également de proposer **un systeme** de détermination d'une caractéristique d'un récepteur dans un milieu. La caractéristique est une information de détection et/ou une information d'identification et/ou une information de localisation de ce récepteur dans le milieu.
A cet effet, le système comprend :

- une antenne adaptée pour émettre une onde primaire dans le milieu, et pour recevoir une onde secondaire résultante de l'onde primaire et de la présence du récepteur dans le milieu,
- une pluralité d'éléments réglables ayant une impédance qui peut être modifiée pour modifier la manière dont l'onde primaire est émise et/ou réfléchie et/ou transmise, et
- un contrôleur relié à l'antenne et aux éléments réglables et qui contrôle l'état des éléments réglables à partir d'un jeu de paramètres.

En outre, le récepteur est adapté pour émettre activement l'onde secondaire en réponse de la réception de l'onde primaire.
Le système **est caractérisé en ce que** le système (1) :

a) fait émettre une onde primaire par l'antenne,
b) contrôle les éléments réglables durant au moins une période de sondage, successivement avec une pluralité de jeux de paramètres, chaque jeu de paramètres étant différent du précédent, afin de modifier la propagation de l'onde primaire et/ou de l'onde secondaire pendant l'émission et/ou la réception des ondes par l'antenne,

c) enregistre des signaux reçus par l'antenne pendant ladite période de sondage, et

d) détermine la caractéristique du récepteur dans le milieu à partir des signaux reçus pour chaque jeu de paramètres.

Dans divers modes de réalisation du système selon l'invention, on peut éventuellement avoir recours en outre à l'une et/ou à l'autre des dispositions suivantes.

Selon un aspect, les éléments réglables appartiennent à une surface ou une pluralité de surfaces.

Selon un aspect, le récepteur réagit à l'onde primaire en émettant une onde secondaire incluant une donnée mémorisée dans le récepteur, et le contrôleur traite les signaux reçus pour décoder ladite donnée et pour déterminer ladite caractéristique.

Selon un aspect, le récepteur est un objet connecté à un réseau informatique sans fil, et l'onde primaire et l'onde secondaire sont des émissions et/ou réceptions du réseau sans fil.

Selon un aspect, le réseau informatique est un réseau de type Bluetooth, WiFi, GSM.

Selon un aspect, le récepteur est un badge de type RFID, et l'onde secondaire comprend au moins une donnée d'identification dudit récepteur.

Selon un aspect, les éléments réglables sont des éléments indépendants de l'antenne et qui modifient la manière dont l'onde primaire est réfléchie et/ou transmise.

Selon un aspect, les éléments réglables sont des diffuseurs à proximité de l'antenne et qui modifient la manière dont l'onde primaire est émise et/ou reçue par ladite antenne.

Selon un aspect, les éléments réglables sont des éléments d'antenne de l'antenne et qui sont commandés avec une phase réglable.

Selon un aspect, les éléments réglables sont sur un dispositif mobile dans le milieu.

## BREVE DESCRIPTION DES DESSINS

D'autres caractéristiques et avantages de l'invention apparaîtront au cours de la description suivante d'au moins un de ses modes de réalisation, donné à titre d'exemple non limitatif, en regard des dessins joints.

Sur les dessins :

- la figure 1 montre un premier mode de réalisation d'un système adapté pour mettre en œuvre un procédé selon l'invention ;
- la figure 2 montre un deuxième mode de réalisation d'un système adapté pour mettre en œuvre un procédé selon l'invention ;

Sur les différentes figures, les mêmes références numériques désignent des éléments identiques ou similaires.

## DESCRIPTION DETAILLEE DE MODES DE REALISATION

L'invention concerne un procédé de détection et/ou localisation et/ou identification d'un récepteur dans un milieu, notamment par émission/réception d'une onde dans ce milieu. Cette onde est nommée onde primaire et peut être de nature électromagnétique, acoustique ou vibratoire.

Par souci de simplicité, l'invention sera décrite principalement dans le cadre de l'application d'une onde électromagnétique, notamment du type d'une transmission sans fil, par exemple de :

- transmission d'énergie électromagnétique, ou
- téléphonie mobile de type GSM, 3G, 4G, 5G, ou
- réseau sans fil de type WiFi, Bluetooth, ou
- réseau entre des objets connectés,

par exemple de type iOT, ou

- lecteurs de badges de type RFID, ou
- toute autre transmission sans fil entre dispositifs ayant une connexion sans fil par onde radio.

Mais, l'invention s'applique à tout domaine fréquentiel des ondes.

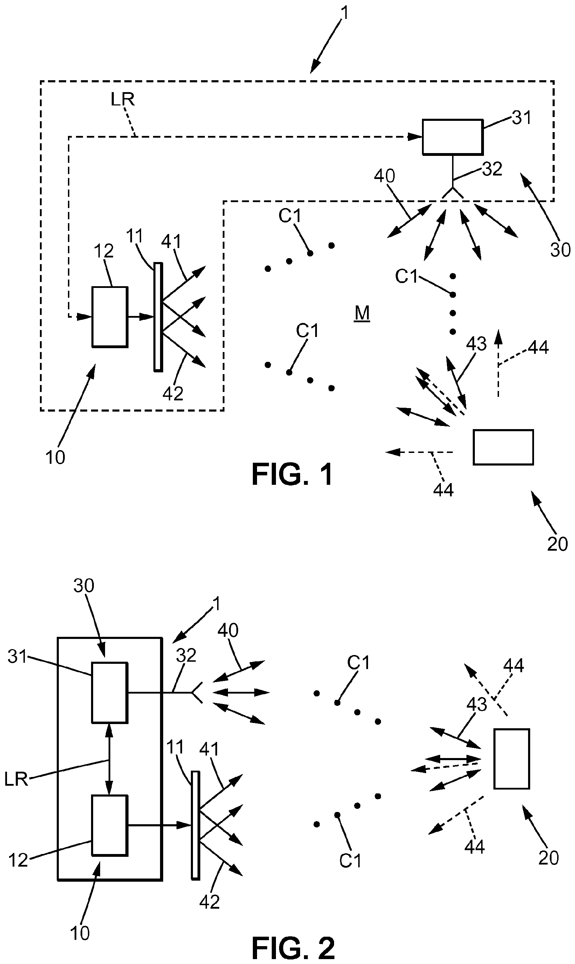

Le procédé est mis en œuvre par exemple par un système 1 tel que représenté de manière schématique en **figure 1.**

Le milieu M comprend un récepteur 20 ce récepteur 20 étant par exemple un objet ou un dispositif ayant une influence sur le champ des ondes dans le milieu M.

Ce récepteur est de type actif, c'est-à-dire qu'il est adapté pour émettre lui-même une onde dans le milieu. En fait :

- soit le récepteur est apte à émettre lui-même une onde électromagnétique dans le milieu M,
- soit le récepteur est apte à modifier une onde électromagnétique incidente sur lui-même ; par exemple il est capable de convertir cette onde incidente en une autre onde émise (par exemple en la modifiant de fréquence).

Ce récepteur 20 actif répond donc à une onde électromagnétique par rapport à un fonctionnement interne : un traitement interne ou une modification interne. Ce récepteur 20 comprend donc une logique interne qui lui donne la qualité de dispositif actif.

Ce récepteur 20 n'est donc pas de type passif, ce qui correspond à la plupart des objets (passifs) qui ont une réponse électromagnétique qui n'est pas activement modifiée par ledit objet. Une telle réponse n'est fonction que du matériau et de la forme de l'objet, et elle n'est pas fonction d'un fonctionnement ou logique interne de l'objet.

En outre, ce récepteur 20 est alimenté ou non par une source d'énergie. Eventuellement, ce récepteur 20 extrait l'énergie de son alimentation en énergie d'une onde reçue, et éventuellement de l'onde primaire utilisée par le système pour le détecter et/ou l'identifier et/ou le localiser.

Le système 1 comprend :

- un premier dispositif appelé émetteur 30 adapté pour au moins émettre une onde primaire 40 dans un milieu M de propagation des ondes, et éventuellement réciproquement recevoir une onde primaire dans ce milieu M, et
- un deuxième dispositif appelé dispositif de mise en forme d'onde 10 adapté pour modifier au niveau du récepteur 20, la réception de l'onde primaire 40 émise par l'émetteur 30 et reçue comme une onde primaire transmise 43.

Ces deux dispositifs, l'émetteur 30 et le dispositif de mise en forme d'onde 10, sont reliés par une liaison LR. La liaison LR est par exemple une liaison numérique, et par exemple une liaison filaire (par exemple Ethernet) ou une liaison sans fil de type informatique ou de téléphone, selon l'un des protocoles déjà cité.

L'émetteur 30 et le dispositif de mise en forme d'onde 10 peuvent être intégrés dans un même boitier ou des boitiers séparés, comme cela est représenté en **figure 2.** Avantageusement, ils seront dans des boitiers séparés pour placer l'émetteur 30 à un emplacement approprié à l'application et pour placer le dispositif de mise en forme d'onde 10 à un emplacement approprié au volume du milieu M et l'environnement de celui-ci.

En variante, le système 1 peut comprendre plusieurs dispositifs de mise en forme d'onde 10 identiques ou différents reliés chacun par une liaison à l'émetteur 30, ce qui permet d'améliorer l'influence desdits dispositifs de mise en forme d'onde sur l'onde primaire transmise 43 qui est reçue par le récepteur 20.

L'émetteur 30 est un dispositif d'émission sans fil, qui comprend :

- une antenne 32 qui émet l'onde primaire 40 qui se propage dans le milieu M, ladite antenne 32 pouvant éventuellement réciproquement recevoir également une onde, et
- une unité de communication 31 qui pilote ladite antenne 32 et qui est reliée par la liaison LR au dispositif de mise en forme d'onde 10.

L'antenne 32 peut éventuellement être composée de plusieurs éléments d'antenne indépendants permettant chacun d'émettre et/ou recevoir un signal indépendant, ce qui permet d'augmenter le nombre de voies, et d'améliorer la détermination d'une caractéristique de détection et/ou d'identification et/ou de localisation, par diverses techniques telles que la focalisation multivoies par exemple de type à commande de phase (ou dite en anglais « phased array antenna »), ou toute autre technique.

Bien sûr différentes architectures de système avec un émetteur 30 et un dispositif de mise en forme d'onde 10 sont possible et accessibles à l'homme du métier, notamment en termes de répartition et/ou d'intégration des fonctions du système.

Le récepteur 20 reçoit l'onde primaire en provenance de l'antenne 32 de l'émetteur 30 de manière directe et/ou indirecte par réflexion sur des éléments du milieu (l'environnement), sous la forme d'une onde primaire transmise 43 qui est la combinaison des contributions de toutes ces trajets directs ou indirects.

Le dispositif de mise en forme d'onde 10 comprend :

- une surface adaptable (électromagnétique) 11 qui réfléchit une onde radio primaire incidente 41 en une onde réfléchie 42, lesdites ondes se propageant dans le même milieu, et
- un contrôleur 12 relié à la surface adaptable (électromagnétique) 11 pour contrôler ladite surface adaptable 11, notamment pour en faire varier une impédance (électromagnétique), ce qui modifie la manière dont l'onde incidente 41 est réfléchie en onde réfléchie 42.

Le dispositif de mise en forme d'onde 10 a ainsi pour but de modifier la réception l'onde primaire par le récepteur 20 dans une zone englobant ce récepteur 20 et le dispositif de mise en forme d'onde 10. Ce dispositif de mise en forme d'onde 10 est par exemple utile dans un environnement présentant des réflexions nombreuses et/ou complexes pour les ondes, lesdites réflexions perturbant la réception du récepteur 20. Le dispositif de mise en forme d'onde 10 génère une autre réflexion qui est contrôlée pour modifier la réception du récepteur 20.

Réciproquement, la présence et l'action d'un récepteur 20 dans le milieu, à portée du dispositif de mise en forme d'onde 10, influence ce dispositif de mise en forme d'onde 10.

Le dispositif de mise en forme d'onde 10 est ainsi à portée du récepteur 20 et à portée de l'émetteur 30, i.e. à une distance pour permettre la réception d'une onde incidente 41 non nulle, et à une distance du récepteur 20 pour permettre la réception d'une contribution d'onde transmise 43 non nulle. Ceci dépend des distances, mais également du milieu de propagation comme précédemment expliqué (réflexions multiples).

Le dispositif de mise en forme d'onde 10 réfléchit l'onde incidente 41 émise par l'émetteur 30 ou réfléchie 30 par un autre dispositif de mise en forme d'onde, en une onde réfléchie 42. D'une manière très simplifiée, l'onde réfléchie 42 se propage alors également dans le milieu, par exemple vers le récepteur 20 où elle contribue à l'onde radio primaire transmise 43 reçue par ledit récepteur 20.

En outre, le dispositif de mise en forme d'onde 10 est alimenté ou non par une source d'énergie. Eventuellement, le dispositif de mise en forme d'onde 10 extrait l'énergie de son alimentation en énergie d'une onde reçue, et éventuellement de l'onde primaire émise par l'antenne 32 de l'émetteur 30 et utilisée par le système pour détecter et/ou identifier et/ou localiser le récepteur actif 20.

La surface adaptable (électromagnétique) 11 peut être construite de nombreuses façons.

Le document de brevet n° US 6 538 621 montre un exemple de surface électromagnétique dont l'impédance est adaptable ou modifiable. Cette surface électromagnétique 11 comprend une pluralité d'éléments résonateurs, chaque élément résonateur étant réglable. La surface électromagnétique 11 de ce document comprend des éléments plaques situés à distance d'un plan de masse, les éléments plaques voisins étant connectés entres eux par une capacité variable, chaque capacité variable pouvant être pilotée par un potentiel de commande. L'impédance de la surface électromagnétique est ainsi modifiée, par exemple pour focaliser l'onde réfléchie 42 ou pour donner une direction spatiale à l'onde réfléchie 42. Eventuellement, la surface électromagnétique 11 est constituée d'une pluralité de cellules, chaque cellule comprenant deux éléments résonateurs différents.

Le document de brevet n° WO 2015/039769 cite et montre d'autres types d'éléments résonateurs pouvant être utilisés dans une surface électromagnétique à impédance adaptable :

- Une diode variable peut remplacer la capacité variable,
- les éléments résonateurs peuvent être d'un seul type de polarisation ou de deux types de polarisation, éventuellement répartis de manière alternée sur la surface,

- les éléments résonateurs ont une ou plusieurs fréquences de résonnance pour contrôler une bande de fréquence prédéterminée,
- les éléments résonateurs sont des éléments binaires à deux états, par exemple définis par un changement de phase ou d'amplitude de l'onde modifiée.

De nombreuses variantes d'éléments résonateurs connus peuvent être utilisées pour former une surface électromagnétique 11 à impédance adaptable.

L'état des éléments résonateur de la surface adaptable 11 est ainsi définit par un jeu de paramètres définit par le contrôleur 12 du dispositif de mise en forme d'onde 10.

Le contrôleur 12 du dispositif de mise en forme d'onde 10 pilote par exemple tous les éléments réglables (par exemple, capacité ou diode variables) de la surface électromagnétique 11 ce qui permet de modifier son impédance. Cette modification est bien plus complexe qu'une focalisation ou une directivité spatiale. Elle modifie la répartition spatiale de l'onde radio du premier canal de propagation CI dans une zone autour du dispositif de mise en forme d'onde 10 jusqu'au récepteur 20.

Dans la demande de brevet WO 2015/039769 le dispositif de mise en forme d'onde 10 comprend un dispositif de transmission pour se connecter au récepteur 20 (dispositif électronique mobile), et récupérer des informations contenues dans une onde pilote provenant de ce dispositif de transmission de ce récepteur 20, ces informations pouvant être le niveau ou la qualité de la communication entre l'émetteur (la station de réseau ou point d'accès) et le récepteur (dispositif électronique mobile). Ceci le rend indépendant de la source de l'onde primaire.

Dans la présente demande de brevet, le dispositif de mise en forme d'onde 10 est au contraire relié à l'unité de communication 31 par la liaison LR et il est piloté par cette unité. Le dispositif de mise en forme 10 dépend donc de l'unité de communication 31 et fait partie du système 1.

Enfin, le système 1 ou le dispositif de mise en forme d'onde 10 ou seulement la surface adaptable 11 peuvent

EP 3 803 452 B1

être directement intégrés dans un élément de construction de bâtiment : un parpaing, une brique, un isolant, une plaque isolante, une plaque de plâtre, ou autre.

Le système 1 ou le dispositif de mise en forme d'onde 10 ou seulement la surface adaptable 11 peuvent également être directement intégrés dans des éléments d'habillage de bâtiment : un sol en parquet, un sol en moquette, un sol en carrelage, un panneau d'habillage, une cloison rapportée, un plafond, une plaque de faux plafond, ou autre.

Le système 1 ou le dispositif de mise en forme d'onde 10 ou seulement la surface adaptable 11 peuvent également être directement intégrés dans des éléments de mobilier : un bureau, une armoire, un meuble à étagère, une étagère, un miroir, un tableau décoratif, un luminaire, un récipient tel qu'un bac de caisse de magasin.

Le système 1 ou le dispositif de mise en forme d'onde 10 ou seulement la surface adaptable 11 peuvent également être directement intégrés dans des éléments de transport, mobiles dans un bâtiment ou en extérieur : voiture, camion, avion, remorque, chariot, chariot pour transporter des marchandises.

Cet élément comprend au moins la surface adaptable 11 du dispositif de réflexion ou tout le dispositif de mise en forme d'onde 10. Il peut être alimenté depuis l'extérieur, ou comprendre une batterie, ou être alimenté à distance par induction de manière permanente ou non.

Dans la présente demande de brevet, le récepteur 20 reçoit une onde radio transmise 43 modifiée (provenant d'une onde réfléchie 42), la simple présence de ce récepteur dans le milieu M génère une onde secondaire 44 qui est une réflexion et/ou transmission de l'onde radio transmise 43. Cette onde secondaire 44 a des caractéristiques physiques qui sont fonctions de la réception de l'onde radio transmise 43 reçue par le récepteur 20, c'est-à-dire de la réception radio entre l'antenne 32 et le récepteur 20.

Lesdites caractéristiques physiques sont une sorte de signature de cette réception par le récepteur 20.

L'onde secondaire 44 produite par la réception de l'onde primaire sur le récepteur 20 est rétro-propagée vers l'antenne 32 de l'émetteur 30, et l'émetteur mesure une onde résultante.

Le système 1 décrit ci-dessus comprend un dispositif de mise en forme d'onde 10 comprenant des éléments réglables adaptés pour modifier la manière dont une onde primaire est réfléchie et/ou transmise par l'ensemble desdits éléments réglables. Cela modifie l'impédance (électromagnétique) de cet ensemble d'éléments réglables.

Ainsi, le dispositif des mise en forme d'onde 10 décrit jusqu'à présent comprend des éléments réglables de type passif, c'est-à-dire ne dissipant pas d'énergie ou ne dissipant que très peu d'énergie pour modifier l'impédance électromagnétique. Ce changement passif modifie la réflexion et/ou transmission de l'onde primaire dans le milieu. Les éléments réglables sont alors des éléments indépendants de l'antenne 32, qui n'émettent pas d'onde en l'absence de l'onde primaire. Ils modifient la manière dont l'onde primaire est réfléchie et/ou transmise dans le milieu.

Le procédé est éventuellement mis en œuvre par un système 1 un peu différent du système 1 précédemment décrit.

Par exemple, le dispositif de mise en forme d'onde 10 est intégré à la source, l'émetteur 30.

Selon une variante, les éléments réglables contrôlés par un jeu de paramètres peuvent être des éléments réglables tels que des diffuseurs métalliques comme décrits dans la demande de brevet n° WO 2008/007024. De tels éléments sont des éléments qui transforment ladite une onde propagative en onde évanescente. Ils sont positionnés à proximité d'une antenne, l'antenne 32 de l'émetteur 30, et modifient les propriétés de cette antenne 32. Notamment, ces diffuseurs peuvent être à une distance inférieure à la longueur d'onde de l'onde primaire, et éventuellement à une distance inférieure à la longueur d'onde primaire divisée par dix. Chacun des diffuseurs est alors électriquement couplé avec un composant électronique réglable pour former un élément réglable de la présente invention. Ces éléments réglables sont encore des éléments passifs, mais ceux-ci sont des éléments qui sont électromagnétiquement couplés à des éléments d'antenne, actifs, qu'ils influencent. Ces éléments réglables sont donc dans cette variante des diffuseurs à proximité de l'antenne et ils modifient la manière dont l'onde primaire est émise et/ou reçue par l'antenne 32.

Selon une variante, les éléments réglables contrôlés par un jeu de paramètres peuvent être des éléments d'antenne d'une antenne à commande de phase (l'antenne 32), et le jeu de paramètre règle la phase de chaque élément d'antenne (élément réglable) par rapport à une référence commune. Dans ce cas, les éléments réglables sont des éléments actifs, c'est-à-dire des éléments qui rayonnent de l'énergie pour générer une onde qui se propage dans le milieu.

Enfin, le système 1 peut être un dispositif mobile dans le milieu M. Eventuellement, l'émetteur 30 est mobile dans le milieu M et/ou le dispositif de mise en forme d'onde 10 est mobile dans le milieu M. Grâce à cette mobilité la caractéristique de détection et/ou identification et/ou localisation du récepteur est mieux déterminée.

Les inventeurs ont constaté que cette mesure de l'onde secondaire est un signal permettant de détecter et/ou identifier et/ou localiser le récepteur 20, de manière plus précise et plus rapide que dans les systèmes de l'art antérieur ne comprenant pas de dispositif de mise en forme d'onde 10, et ceci grâce à un procédé particulier décrit ci-après.

Selon le procédé de l'invention, le système 1 :

a) fait émettre une onde primaire par l'antenne 32 de l'émetteur 30,
b) contrôle durant au moins une période de sondage P les éléments réglables du dispositif de mise en forme d'onde 10, successivement avec une pluralité de jeux de paramètres, chaque jeu de paramètres étant différent du précédent, afin de modifier la propagation de l'onde primaire et/ou de l'onde secondaire pendant l'émission et/ou la réception des ondes par l'antenne 32,

c) enregistre des signaux reçus par l'antenne durant ladite période de sondage P, et

d) détermine la caractéristique du récepteur dans le milieu à partir des signaux reçus pour chaque jeu de paramètres.

Par exemple, durant une période sondage P, qui est une période temporelle, le système change N fois le jeu de paramètres contrôlant les éléments réglables, pour modifier N fois l'impédance de la surface adaptable 11. N est un nombre entier naturel positif, supérieur à deux. Il est de préférence supérieur à 10, de telle sorte que de nombreux jeux de paramètres soient appliqués. Eventuellement ce nombre N est supérieur 20 pour augmenter le nombre de jeux de paramètres et le nombre d'expériences dans le milieu M et ainsi pour augmenter la précision de la détermination de la caractéristique.

En fait, ce procédé effectue une pluralité d'expériences du milieu en changeant successivement et plusieurs fois le jeu de paramètres contrôlant les éléments réglables de la surface adaptable 11. Donc, ce procédé fait varier plusieurs fois l'impédance de la surface adaptable 11.

Ce procédé fait ainsi varier la propagation des ondes dans le milieu, et notamment ce procédé fait varier les chemins multiples indirects, alors que les chemins les plus directs sont conservés. Notamment, pour toutes les expériences, le chemin direct entre l'antenne 32 et le récepteur 20 est conservé de sorte que sa contribution dans l'estimation de la caractéristique du récepteur 20 est prépondérante.

A chaque expérience (i.e. pour chaque jeu de paramètre, i.e. chaque impédance de la surface adaptable 11), les signaux en retour du récepteur 20 sont enregistrés par le système 1, ce qui permet par traitement d'éliminer les chemins les moins directs, i.e. déterminer les chemins de propagation majoritaires communs à toutes les expériences, et principalement le chemin direct entre l'antenne 32 et le récepteur 20.

Le système traite les signaux pour effectuer un traitement correspondant à la caractéristique recherchée : détection, identification ou localisation, par exemple à l'aide d'un traitement tel que utilisé dans les procédés de l'art antérieur, mais basé sur les signaux reçus par le système pour la pluralité de jeux de paramètres.

Selon une variante, la détermination de la caractéristique de l'étape d) comprend un calcul de corrélation des signaux reçus, par exemple pour extraire des composantes communes à ces signaux reçus, et pour déterminer la caractéristique du récepteur 20.

Selon une variante, la détermination de la caractéristique de l'étape d) comprend un calcul statistique des signaux reçus, par exemple pour extraire des pré-informations communes à ces signaux reçus, et pour déterminer la caractéristique du récepteur 20.

Par exemple, la caractéristique de détection peut être basée sur la détection d'un signal reçu supérieur à un seuil prédéterminé. Ainsi, le récepteur 20 est détecté si le signal reçu dépasse ce seuil prédéterminé, et il n'est pas détecté sinon.

Par exemple, la caractéristique de détection et/ou d'identification et/ou de localisation peut être basée sur une comparaison de chaque signal reçu par l'antenne 32 (en retour de l'émission de l'onde primaire) à une signature particulière, i.e. un pré-enregistrement d'un signal de retour attendu pour un récepteur 20 connu. On entend par comparaison tout processus de cohérence entre deux signaux et/ou entre un signal reçu et un signal de signature (ou un signal de référence). Par exemple, la comparaison résulte en une détection d'un récepteur 20, si la cohérence entre les signaux est supérieure à un seuil prédéterminé, et en une non détection sinon.

Par exemple, la caractéristique du récepteur de détection et/ou d'identification et/ou de localisation peut être basée sur une comparaison de chaque signal reçu par l'antenne 32 (en retour de l'émission de l'onde primaire) à une base de données enregistrée de signaux prédéterminés, ladite base de données comprenant pour chaque signal prédéterminé une caractéristique prédéterminée de détection et/ou d'identification et/ou de localisation du récepteur 20. Ainsi, on détermine le signal prédéterminé de la base de données le plus proche du signal reçu en effectuant toutes les comparaisons et en déterminant la comparaison de plus grande vraisemblance. Ce processus est apparenté à un calcul de corrélation. Et, la caractéristique du récepteur déterminée est la caractéristique prédéterminée assignée au signal prédéterminé de plus grande vraisemblance.

Cette base de données de signaux prédéterminés est avantageusement renseignée en fonction de plusieurs jeux de paramètres. Alors, la caractéristique du récepteur est déterminée à partir des résultats de vraisemblance de l'ensemble des jeux de paramètres, comme explicité à l'étape d) du procédé. Ainsi, la caractéristique du récepteur déterminée est la caractéristique prédéterminée assignée au signal prédéterminé de plus grande vraisemblance parmi toutes ou une partie des possibilités de jeux de paramètres.

Ces dispositions permettent alors de tenir compte at/ou d'être robuste à des variations ou dérives du milieu dans le temps, et par exemple des changements provoqués par la surface adaptable 11.

Eventuellement, le système 1 comprend en outre des récepteurs de référence de caractéristique prédéterminée qui sont placés dans le milieu M. Autrement dit, le milieu comprend une répartition de récepteurs de référence connus, i.e. dont la caractéristique de détection/identification/localisation de ce récepteur de référence est enregistrée dans la base de données en association avec chacun des signaux prédéterminés correspondants auxdits récepteurs de référence. Cette caractéristique prédéterminée comprend un identifiant et/ou une position dans le milieu (prédéterminée pour le système par exemple durant une étape de calibration ou d'apprentissage du système).

Le contrôleur 12 compare alors les signaux reçus pour la pluralité de jeux de paramètres avec la base de données des signaux prédéterminés de ces récepteurs de référence (e.g. signaux reçus par ces récepteurs de référence durant l'étape de calibration). Cette base de de données comprend également la caractéristique prédéterminée de chaque récepteur de référence en association au signal prédéterminé pour ce récepteur de référence.

Grâce à ces récepteurs de référence, la base de données peut être mise à jour périodiquement : les signaux prédéterminés des récepteurs de référence sont mesurée périodiquement avec une pluralité de jeux de paramètres. Par exemple, seuls les signaux reçus les plus cohérents avec les précédents signaux reçus et validés (signaux prédéterminés) ou seuls les signaux reçus les plus cohérents entre eux sont conservés dans la base de données comme nouveaux signaux prédéterminés.

Grâce à cette disposition des récepteurs de référence, il est possible de suivre des variations ou dérives du milieu dans le temps, et notamment des variations ou dérives des signaux reçus de référence. Les identifiants et positions des récepteurs de référence restent par contre invariants par rapport à la prédétermination durant la phase de calibration. Si des récepteurs de référence sont déplacés, ajoutés ou supprimés, la base de données doit alors être mise à jours par un autre processus, tel que durant de la phase de calibration.

Optionnellement, la base de données comprend des signaux prédéterminés sans relation avec un récepteur de référence et des signaux prédéterminés correspondant à des récepteurs de référence ; ces dernier pouvant être mis à jour régulièrement. Le procédé utilise alors toute ou partie de ladite base de données pour déterminer la caractéristique du récepteur. Notamment, il est possible de sélectionner une partie seulement de la base de données pour déterminer la caractéristique du récepteur, notamment par exemple sur la base de valeur des jeux de paramètres proches d'une valeur cible de paramètres ou de proches d'une valeur de caractéristique cible (comme une position spatiale dans le milieu pour la localisation).

En outre, le contrôleur 12 peut comprendre une logique de commande de l'antenne 32 pour que l'onde primaire soit focalisée autour d'un ou plusieurs récepteurs de référence, ce qui permet d'effectuer une recherche de récepteur 20 (récepteur inconnu) autour desdits récepteurs de référence sur lequel le système focalise l'onde primaire. L'antenne 32 est ainsi par exemple une antenne composée de plusieurs éléments d'antenne indépendants de type à commande de phase permettant une focalisation par exemple par formation de voies (ou dite en anglais « beamforming »). Alors, le procédé / système focalise l'onde primaire autour d'un récepteur de référence avant d'effectuer les étapes a) à d) pour détecter / identifier / localiser un récepteur 20 dans cette région autour du récepteur de référence.

Optionnellement, la logique du contrôleur 12 de commande de l'antenne 32 pilote les éléments d'antenne comme ci-dessus, mais pilote également des éléments réglables ou tous les éléments réglables pour que l'onde primaire soit focalisée autour d'un ou plusieurs récepteur de référence, ce qui permet d'effectuer une recherche encore plus efficace de récepteur 20 (récepteur inconnu) autour desdits récepteurs de référence sur lequel le système (antenne et éléments réglables) focalise l'onde primaire. Comme ci-dessus, l'antenne 32 est ainsi par exemple une antenne multi-éléments à commande de phase pour effectuer une formation de voies. Alors, le procédé / système focalise l'onde primaire autour d'un récepteur de référence avant d'effectuer les étapes a) à d) pour détecter / identifier / localiser un récepteur 20 dans le milieu M dans une région autour du récepteur de référence.

La caractéristique du récepteur déterminée peut alors être fonction de la ou des caractéristiques prédéterminées du ou des récepteurs de références focalisés. Notamment, en fonction du signal reçu en provenance du récepteur 20, la caractéristique du récepteur peut être une combinaison linéaire ou pas des caractéristiques de référence desdits récepteurs de référence.

Il est alors possible de focaliser les récepteurs de référence les uns après les autres ou seulement une sous liste de ces récepteurs de référence.

Par exemple, la caractéristique d'identification est incluse dans chacun des signaux reçus par l'antenne 32 (en retour de l'émission de l'onde primaire). C'est-à-dire que le récepteur 20 comprend une mémoire dans laquelle est enregistrée une donnée d'identification, et il transmet cette donnée d'identification avec l'onde secondaire 44 émise. Le système 1 décode alors cette donnée d'identification pour chaque signal reçu. Eventuellement, le récepteur 20 ainsi un badge RFID qui répond à une onde primaire 40 en émettant une onde secondaire 44 avec sa donnée d'identification.

Le traitement de la pluralité des identifications reçues (par exemple par comparaison) permet la détermination d'une identification la plus probable et/ou d'une pluralité de récepteurs avec chacun une donnée d'identification différente.

Par exemple, la caractéristique de localisation est déterminée en estimant un angle d'arrivé et/ou un temps de vol de l'onde secondaire résultante de la présence du récepteur 20 dans le milieu M. Eventuellement, l'antenne 32 comprend une pluralité d'éléments d'antennes et l'ensemble des signaux reçus par chaque élément d'antenne permettent d'améliorer l'estimation de la caractéristique de localisation du récepteur 20.

Par exemple, la caractéristique de détection et/ou d'identification et/ou de localisation est déterminée en utilisant une donnée incluse dans l'onde secondaire 44 en retour. Dans certaines applications de communication avec des récepteurs 20 radio sans fil, par exemple par GSM, WiFi ou Bluetooth, le récepteur 20 introduit dans son émission des informations sur la réception de l'onde primaire qu'il reçoit, et par exemple le niveau et/ou la qualité et/ou l'estimation de la fonction de transfert du canal de propagation C1 entre l'antenne 32 et le récepteur 20. Le système 1 est alors adapté à décoder les signaux reçus et à extraire ces informations des signaux. Ces informations permettent alors d'estimer par exemple la distance entre l'antenne 32 et le récepteur 20, et donc elles permettent de déterminer la localisation du récepteur 20 dans le milieu M.

Ainsi, le contrôleur 12 peut utiliser au moins une donnée incluse par le récepteur 20 dans chacun des signaux reçus par lui, cette donnée pouvant correspondre au niveau (amplitude ou intensité) de la réception de l'onde primaire par le récepteur 20 et/ou à la qualité de la réception de l'onde primaire par le récepteur 20 et/ou l'estimation de la fonction de transfert du canal de propagation entre l'antenne 32 et le récepteur 20.

Selon une première variante, le système 1 (par exemple le contrôleur 12 ou l'unité de communication 31) calcule une moyenne des signaux reçus par l'antenne 32 pour déterminer un signal moyen et pour déterminer la caractéristique du récepteur 20 à partir ce signal moyen. Le système calcule ainsi directement une moyenne des signaux reçus par l'antenne 32 pour déterminer la caractéristique du récepteur 20.

En variante, le système 1 calcule une moyenne de quantités calculées à partir des signaux reçus par l'antenne 32 pour déterminer la caractéristique du récepteur 20. Le système calcule ainsi indirectement une moyenne des signaux reçus par l'antenne 32 pour déterminer la caractéristique du récepteur 20.

Selon une seconde variante, la durée de la période de sondage P est courte, et par exemple inférieure ou égale à une durée de l'onde primaire 40 et/ou de l'onde secondaire 44 retournée. Cela signifie que jeu de paramètres est modifié au moins plusieurs fois durant la propagation de l'onde primaire et/ou de l'onde secondaire. Ainsi, les signaux reçus par l'antenne 32 et enregistrés tiennent compte de cette pluralité de jeux de paramètres, i.e. de la pluralité d'impédances.

Cette seconde variante réalise un équivalent de la première variante de manière analogique, sans utiliser de ressource de calcul du système. Le système 1 traite alors directement les signaux reçus par l'antenne 32 pour déterminer la caractéristique du récepteur 20.

La cadence C de modification de l'impédance de la surface adaptable 11 est le nombre N de jeux de paramètres divisé par la durée de la période de sondage P, i.e. $C = N/P$. Par exemple, cette cadence C est supérieure à une cadence limite, qui est par exemple de 100 par secondes pour avoir un changement très rapide de l'impédance, ou de 10 par secondes pour avoir un changement simplement rapide.

Selon une variante, la pluralité de jeux de paramètres est une séquence aléatoire, c'est-à-dire que :

- les valeurs d'un jeu de paramètre sont des valeurs aléatoires les unes par rapport aux autres, i.e. les états des éléments réglables sont aléatoires les uns par rapport aux autres, et
- une valeur d'un jeu de paramètres correspondant à un élément réglable est aléatoire par rapport à la valeur du jeu de paramètre précédent ou de tout autre jeu de paramètre correspondant à ce même élément réglable.

Selon une variante, la pluralité de jeux de paramètres est une séquence préenregistrée, c'est-à-dire que la pluralité de jeu de paramètres est un ensemble de valeurs qui sont rejouées une fois la séquence entièrement jouée.

De cette manière, le système 1 fait varier l'impédance de la surface adaptable 11 de manière aléatoire ou quasi-aléatoire dans le temps, ce qui permet de faire varier les chemins de propagation des ondes primaire et secondaire dans le milieu.

Selon une variante, la pluralité de jeux de paramètres est une séquence dans laquelle l'état d'un faible nombre des éléments réglable est modifié à chaque étape, c'est-à-dire qu'un jeu de paramètre ne diffère du précédent que par quelques valeurs correspondant à ces éléments réglables de la surface adaptable 11. Le faible nombre est par exemple inférieur à 10% du nombre total des éléments réglables du système 1. Eventuellement, ce faible nombre est réduit à un seul : Un seul élément réglable est modifié par une seule valeur du jeu de paramètres.

Grâce à ce type de jeux de paramètres, le traitement des signaux reçus peut être simplifié.

Notamment, dans le cas d'un traitement pour la localisation du récepteur 20, et si la position spatiale de chaque élément réglable de la surface 20 est connue, les amplitudes et/ou les temps de vol des signaux reçus permettent par exemple d'estimer des distances entre le récepteur 20 et chacun des éléments réglables. Ces distances permettent de déduire la position spatiale du récepteur 20 dans le milieu M, c'est-à-dire sa localisation dans le milieu M.

Selon une variante, le système 1 extrait une unique composante fréquentielle de chaque signal reçu, et grâce à la pluralité des signaux reçus, i.e. par exemple un signal pour chaque jeu de paramètres ou impédance de la surface adaptable 11, le système 1 est alors capable de déterminer la caractéristique du récepteur 20 (détection et/ou identification et/ou localisation) selon l'un ou l'autre des exemples de traitements explicités ci-dessus.

Nous allons maintenant détailler des variantes du procédé / système, dans lequel le récepteur 20 insère dans l'onde primaire transmise 43 une donnée correspondant à sa réception de l'onde primaire.

Selon une première variante, la donnée correspond au niveau de l'onde reçue par le récepteur 20, c'est-à-dire à son intensité.

Durant la période de sondage, le contrôleur 12 utilise deux jeux de paramètre : un premier jeu de paramètres et un second jeu de paramètres, le second jeu de paramètre correspondant à un réglage de phase des éléments réglables décalé de $\pi$ radians par rapport à celui du premier jeu de paramètres. Cela signifie que l'onde réfléchie et/ou transmise d'un élément réglable a sa phase qui évolue de $\pi$ radians entre le premier jeu et le second jeu de paramètres.

Ensuite, le contrôleur 12 décode dans les signaux reçus une première donnée $I_1$ correspondant au premier jeu de paramètres et une seconde donnée $I_2$ correspondant au second jeu de paramètres, la première et la seconde données correspondant ainsi au niveau de l'onde reçue par le récepteur en réponse de chaque jeu de paramètres (le premier et le second) ; c'est-à-dire que la première donnée $I_1$ correspond au niveau avec une première phase, et la seconde donnée $I_2$ correspond au niveau avec une phase décalée de $\pi$ radians par rapport à la première phase.

La caractéristique du récepteur 20 est alors déterminée par le contrôleur 12 à partir d'une première grandeur de calcul $\psi_1$ qui est la différence entre la seconde donnée $I_2$ et la première donnée $I_1$, c'est-à-dire :

$$\psi_1 = (I(\pi) - I(0)) = (I_2 - I_1).$$

La caractéristique du récepteur déterminée peut être une détection et/ou une identification et/ou une localisation dans le milieu.

La caractéristique du récepteur est alors par exemple déterminée en fonction de plusieurs premières grandeurs de calcul $\psi_1$ calculées à partir des données décodées pour une pluralité de jeux de paramètres, ces jeux de paramètres comprenant plusieurs paires de premier jeu de paramètres et de second jeu de paramètres, et chaque paire permettant de calculer une première grandeur de calcul $\psi_1$ comme explicité avec la formule précédente.

Par exemple, la caractéristique du récepteur peut être déterminée par une moyenne ou un produit scalaire ou une combinaison ou une fonction des premières grandeurs de calcul $\psi_1$ calculées à partir de chaque paire de jeux de paramètres contenant un premier jeu de paramètres et de second jeu de paramètres. Selon une deuxième variante, la donnée correspond aussi au niveau de l'onde reçue par le récepteur 20, c'est-à-dire à son intensité.

Durant la période de sondage, le contrôleur 12 utilise quatre jeux de paramètres : un premier jeu de paramètres, un second jeu de paramètres, un troisième jeu de paramètres, et un quatrième jeu de paramètres.

Le second jeu de paramètre correspond à un réglage de phase des éléments réglables décalé de $\pi/2$ radians par rapport au premier jeu de paramètres, le troisième jeu de paramètre correspond à un réglage de phase des éléments réglables décalé de $\pi$ radians par rapport au premier jeu de paramètres, et le quatrième jeu de paramètre correspond à un réglage de phase des éléments réglables décalé de $3.\pi/2$ radians par rapport au premier jeu de paramètres. Cela signifie que l'onde réfléchie et/ou transmise d'un élément réglable a sa phase qui évolue de l'angle correspondant.

Ensuite, le contrôleur 12 décode dans les signaux reçus une première donnée $I_1$ correspondant au premier jeu de paramètres, une seconde donnée $I_2$ correspondant au second jeu de paramètres, une troisième donnée $I_3$ correspondant au troisième jeu de paramètres, et une quatrième donnée $I_4$ correspondant au quatrième jeu de paramètres. La première, la seconde, la troisième et la quatrième donnée correspondent chacune au niveau de l'onde reçu par le récepteur pour le jeu de paramètre correspondant.

La caractéristique du récepteur est alors déterminée par le contrôleur 12 à partir d'une deuxième grandeur de calcul $\psi_2$ calculée par la formule suivante :

$$\psi_2 = (I(\pi) - I(0)) + i(I(3\pi/2) - I(\pi/2)) = (I_3 - I_1) + i(I_4 - I_2)$$

$i$ étant le nombre d'unité imaginaire.

La caractéristique déterminée peut être une détection et/ou une identification et/ou une localisation dans le milieu.

La caractéristique du récepteur est alors par exemple déterminée en fonction de plusieurs deuxièmes grandeurs de calcul $\psi_2$ calculées à partir des données décodées pour une pluralité de jeux de paramètres, ces jeux de paramètres comprenant des groupes de quatre jeux de paramètres tels que définis ci-dessus.

Par exemple, la caractéristique du récepteur peut être déterminée par une moyenne ou un produit scalaire ou une combinaison ou une fonction des deuxièmes grandeurs de calcul $\psi_2$ calculées à partir de chaque groupe de quatre jeux de paramètres. Une généralisation à un nombre plus grand de jeux de paramètres est possible.

Selon une troisième variante, la donnée correspond l'estimation de la fonction de transfert du canal de propagation entre l'antenne 32 et le récepteur 20, ce qui permet notamment d'obtenir l'amplitude et la phase de cette fonction de transfert ou la partie réelle et la partie imaginaire de cette fonction de transfert si l'estimation est effectuée dans cette base.

Durant la période de sondage, le contrôleur 12 décode dans les signaux reçus une donnée correspondant à l'estimation de la fonction de transfert ($A(\omega)$) du canal de propagation entre l'antenne 32 et le récepteur 20. Dans ce cas, l'émetteur 30 et le récepteur 20 utilisent pour l'onde primaire 40 un canal de propagation C1 multi fréquentiel ou avec une bande passante prédéterminée, de sorte que la fonction de transfert peut être estimée au moins à une pluralité de pulsations fréquentielles $\omega_i$, où une pulsation fréquentielle $\omega_i$ est égale à $2.\pi.f_i$, et $f_i$ est une des fréquences d'estimation de la fonction de transfert.

La caractéristique du récepteur est alors déterminée par le contrôleur 12 à partir d'une troisième grandeur de calcul $m(\omega)$ par la formule suivante :

$$m(\omega) = \frac{dA}{d\omega} A^*(\omega)$$

où

$A(\omega)$ est la fonction de transfert en fonction de la pulsation fréquentielle $\omega$ entre l'antenne 32 et le récepteur 20,
$d()/d\omega$ est l'opérateur de dérivé par rapport à la pulsation fréquentielle, et
$()^*$ est l'opérateur de conjugaison des nombres complexe.

Le calcul de la troisième grandeur de calcul peut être effectué par toute autre formulation approchée ou équivalente de la formule précédente, notamment pour le calcul de la dérivée par rapport à la pulsation fréquentielle.

La caractéristique déterminée peut être une détection et/ou une identification et/ou une localisation dans le milieu.

La caractéristique du récepteur est alors par exemple déterminée en fonction de plusieurs troisièmes grandeurs de calcul $m(\omega)$ calculées à partir des données décodées pour une pluralité de jeux de paramètres.

Par exemple, la caractéristique du récepteur peut être déterminée par une moyenne ou un produit scalaire ou une combinaison ou une fonction des troisièmes grandeurs de calcul $m(\omega)$ calculées à partir des divers jeux de paramètres.

Dans les variantes et modes de réalisations de l'invention, il est possible de répéter les émissions de l'onde primaire afin d'augmenter le nombre de signaux reçus et pour améliorer la détermination de la caractéristique du récepteur 20 que cela soit la détection et/ou l'identification et/ou la localisation de celui-ci.

Enfin, le système et/ou procédé selon l'invention est particulièrement dans **les applications** suivantes.

Selon une première application, le procédé et système est adapté pour la détection et/ou identification et/ou localisation d'un ou plusieurs récepteurs 20, par exemple de type badge ou tag RFID, et dans lequel les éléments réglables sont de type passif comme explicité dans la présente description. Ces éléments réglables sont indépendants de l'antenne 32 d'émission de l'onde primaire.

Avantageusement, les éléments réglables de cette application sont placés à un ou plusieurs emplacements adaptés au volume du milieu M, et éventuellement distribués dans le volume du milieu.

Dans cette première application, le procédé / système de détermine d'une caractéristique d'un récepteur 20 dans le milieu, cette caractéristique étant une information de détection et/ou une information d'identité et/ou une information de localisation dudit récepteur 20, le procédé étant mis en œuvre par un système 1 comprenant :

- une antenne 32 adaptée pour émettre une onde primaire dans le milieu, et pour recevoir une onde secondaire résultante de l'onde primaire et de la présence du récepteur dans le milieu,
- une pluralité d'éléments réglables ayant une impédance qui peut être modifiée pour modifier la manière dont l'onde primaire est réfléchie et/ou transmise, ces éléments réglables étant indépendants de l'antenne 32, et
- un contrôleur 12 relié à l'antenne et aux éléments réglables et qui contrôle l'état des éléments réglables à partir d'un jeu de paramètres, et

le récepteur 20 étant adapté pour émettre activement l'onde secondaire en réponse de la réception de l'onde primaire, et ce récepteur est un badge ou tag de type RFID, et l'onde secondaire retournée par ce récepteur comprend au moins une donnée d'identification dudit récepteur.

ledit procédé étant caractérisé en ce que le système :

a) fait émettre une onde primaire par l'antenne,
b) contrôle les éléments réglables durant au moins une période de sondage, successivement avec une pluralité de jeux de paramètres, chaque jeu de paramètres étant différent du précédent, afin de modifier la propagation de l'onde primaire et/ou de l'onde secondaire pendant l'émission et/ou la réception des ondes par l'antenne,

c) enregistre des signaux reçus par l'antenne pendant ladite période de sondage, et

d) détermine la caractéristique du récepteur dans le milieu à partir des signaux reçus pour chaque jeu de paramètres.

Selon une deuxième application, le procédé et système est adapté à une communication avec un ou plusieurs récepteurs 20 de type badge ou tag RFID ou de type téléphone mobile relié par un réseau sans fil (GSM, 3G, 4G, 5G) ou de type ordinateur mobile relié à un réseau sans fil (WiFi, Bluetooth), ou de type objet connecté relié à un réseau sans fil, et dans lequel les éléments réglables sont de type passif ou actif (intégrés ou non intégrés à l'antenne 32) comme explicité dans la présente description. Dans ce cas, le contrôleur 12 décode avantageusement dans les signaux reçus une donnée en provenance du récepteur 20 pour effectuer un traitement particulier pour déterminer une caractéristique du récepteur, et en particulier sa localisation spatiale.

Dans cette deuxième application, le procédé / système détermine d'une caractéristique d'un récepteur 20 dans le milieu, cette caractéristique étant une information de localisation du récepteur 20, le procédé étant mis en œuvre par un système 1 comprenant :

- une antenne 32 adaptée pour émettre une onde primaire dans le milieu, et pour recevoir une onde secondaire résultante de l'onde primaire et de la présence du récepteur dans le milieu,
- une pluralité d'éléments réglables ayant une impédance qui peut être modifiée pour modifier la manière dont l'onde primaire est émise et/ou réfléchie et/ou transmise, et
- un contrôleur 12 relié à l'antenne et aux éléments réglables et qui contrôle l'état des éléments réglables à partir d'un jeu de paramètres, et

le récepteur 20 étant adapté pour émettre activement l'onde secondaire en réponse de la réception de l'onde primaire, ledit procédé étant caractérisé en ce que le système :

a) fait émettre une onde primaire par l'antenne,

b) contrôle les éléments réglables durant au moins une période de sondage, successivement avec une pluralité de jeux de paramètres, chaque jeu de paramètres étant différent du précédent, afin de modifier la propagation de l'onde primaire et/ou de l'onde secondaire pendant l'émission et/ou la réception des ondes par l'antenne,

c) enregistre des signaux reçus par l'antenne pendant ladite période de sondage, et

d) détermine la caractéristique du récepteur dans le milieu à partir des signaux reçus pour chaque jeu de paramètres.

Dans toutes ces applications, les diverses variantes présentées dans la présente description peuvent être appliquées ou adaptées.

Dans toutes ces applications, la pluralité de jeux de paramètres permet au système d'améliorer la caractéristique déterminée du récepteur.

**Revendications**

1. **Procédé de détermination d'une caractéristique** d'un récepteur (20) dans un milieu, ladite caractéristique étant une information de détection et/ou une information d'identité et/ou une information de localisation dudit récepteur (20), ledit procédé étant mis en œuvre par un système (1) comprenant :

    - une antenne (32) adaptée pour émettre une onde primaire dans le milieu, et pour recevoir une onde secondaire résultante de l'onde primaire et de la présence du récepteur dans le milieu,
    - une pluralité d'éléments réglables ayant une impédance qui peut être modifiée pour modifier la manière dont l'onde primaire est émise et/ou réfléchie et/ou transmise, et
    - un contrôleur (12) relié à l'antenne et aux éléments réglables et qui contrôle l'état des éléments réglables à partir d'un jeu de paramètres, et

    le récepteur (20) étant adapté pour émettre activement l'onde secondaire en réponse de la réception de l'onde primaire,
    ledit procédé **étant caractérisé en ce que** le système :

    a) fait émettre une onde primaire par l'antenne,

    b) contrôle les éléments réglables durant au moins une période de sondage, successivement avec une pluralité de jeux de paramètres, chaque jeu de paramètres étant différent du précédent, afin de modifier la propagation de l'onde primaire et/ou de l'onde secondaire pendant l'émission et/ou la réception des ondes par l'antenne,
c) enregistre des signaux reçus par l'antenne pendant ladite période de sondage, et
d) détermine la caractéristique du récepteur dans le milieu à partir des signaux reçus pour chaque jeu de paramètres.

2. Procédé selon la revendication 1, dans lequel le contrôleur (12) calcule une moyenne des signaux reçus ou une moyenne de quantités calculées à partir des signaux reçus pour déterminer la caractéristique du récepteur.

3. Procédé selon la revendication 1 ou la revendication 2, dans lequel la pluralité de jeux de paramètres est une séquence aléatoire.

4. Procédé selon la revendication 1 ou la revendication 2, dans lequel la pluralité de jeux de paramètres est une séquence préenregistrée.

5. Procédé selon la revendication 1, dans lequel la pluralité de jeux de paramètres est une séquence qui modifie un faible nombre des éléments réglables à la fois, ledit faible nombre étant inférieur à 10% des éléments réglables du système, et le contrôleur détermine la caractéristique à partir des signaux enregistrés de plus forte amplitude, et de la connaissance des positions des éléments réglables ayant provoqués cette plus forte amplitude.

6. Procédé selon l'une quelconque des revendications 1 à 5, dans lequel le contrôle des éléments réglables est effectué à une cadence supérieure à une cadence limite, par exemple de 10 par secondes.

7. Procédé selon l'une quelconque des revendications 1 à 6, dans lequel le contrôleur compare les signaux reçus pour la pluralité de jeux de paramètres avec une base de données mémorisée de signaux prédéterminés, ladite base de de donnée incluant la caractéristique du récepteur en association aux signaux prédéterminés.

8. Procédé selon la revendication 7, dans lequel les signaux prédéterminés comprennent une seule fréquence.

9. Procédé selon la revendication 1 à 7, dans lequel le système comprend en outre des récepteurs de référence de caractéristique prédéterminée, et dans lequel le contrôleur compare les signaux reçus pour la pluralité de jeux de paramètres avec une base de données mémorisée de signaux prédéterminés pour ces récepteurs de référence, ladite base de de donnée incluant la caractéristique prédéterminée de chaque récepteur de référence en association au signal prédéterminé pour ce récepteur de référence, et la caractéristique du récepteur est déterminée en déterminant la comparaison de plus grande vraisemblance entre les signaux reçus et les signaux prédéterminés des récepteurs de référence.

10. Procédé selon la revendication 9, dans lequel on met à jour périodiquement les signaux prédéterminés des récepteurs de référence de la base de données.

11. Procédé selon la revendication 9 ou la revendication 10, dans lequel le contrôleur (12) comprend une logique de commande de l'antenne (32) et/ou des éléments réglables pour que l'onde primaire soit focalisée autour d'un ou plusieurs récepteurs de référence, et on focalise l'onde primaire autour dudit récepteur de référence avant d'effectuer les étapes a) à d).

12. Procédé selon la revendication 9, dans lequel les signaux reçus des récepteurs de référence sont mesurés périodiquement avec la pluralité de jeux de paramètres, et seuls les signaux reçus les plus cohérents sont conservés dans la base de données.

13. Procédé selon l'une quelconque des revendications 1 à 7, dans lequel le contrôleur (12) utilise au moins une donnée incluse par le récepteur (20) dans chacun des signaux reçus, ladite donnée correspondant au niveau et/ou à la qualité et/ou à l'estimation de la fonction de transfert du canal de propagation entre l'antenne (32) et le récepteur (20).

14. Procédé selon la revendication 13, dans lequel :

- la pluralité de jeux de paramètres pour les éléments réglables comprend un premier jeu de paramètres et un second jeu de paramètres, le second jeu de paramètre correspondant à une phase décalée de $\pi$ radians par rapport au premier jeu de paramètres,
- le contrôleur (12) décode dans les signaux reçus une première donnée ($I_1$) correspondant au premier jeu de paramètres et une seconde donnée ($I_2$) correspondant au second jeu de paramètres, la première et la seconde données correspondant au niveau de l'onde reçu par le récepteur, et

- la caractéristique du récepteur est déterminée à partir d'une première grandeur de calcul ($\psi_1$) qui est la différence entre la seconde donnée et la première donnée, c'est-à-dire :

$$\psi_1 = (I_2 - I_1)$$

où

$\psi_1$ est la première grandeur de calcul, et
$I_1$ et $I_2$ sont respectivement la première donnée et la seconde donnée.

**15.** Procédé selon la revendication 13, dans lequel :

- la pluralité de jeux de paramètres pour les éléments réglables comprend un premier jeu de paramètres, un second jeu de paramètres, un troisième jeu de paramètres, un quatrième jeu de paramètres, le second jeu de paramètre correspondant à une phase décalée de $\pi/2$ radians par rapport au premier jeu de paramètres, le troisième jeu de paramètre correspondant à une phase décalée de $\pi$ radians par rapport au premier jeu de paramètres, et le quatrième jeu de paramètre correspondant à une phase décalée de $3.\pi/2$ radians par rapport au premier jeu de paramètres,
- le contrôleur (12) décode dans les signaux reçus une première donnée ($I_1$) correspondant au premier jeu de paramètres, une seconde donnée ($I_2$) correspondant au second jeu de paramètres, une troisième donnée ($I_3$) correspondant au troisième jeu de paramètres, et une quatrième donnée ($I_4$) correspondant au quatrième jeu de paramètres, la première, la seconde, la troisième et la quatrième donnée correspondant au niveau de l'onde reçu par le récepteur, et
- la caractéristique du récepteur est déterminée à partir d'une deuxième grandeur de calcul ($\psi_2$) suivante :

$$\psi_2 = (I_3 - I_1) + i(I_4 - I_2)$$

où

$\psi_2$ est la deuxième grandeur de calcul, et
$I_1$, $I_2$, $I_3$ et $I_4$ sont respectivement la première donnée, la seconde donnée, la troisième donnée, et la quatrième donnée, et
$i$ est le nombre d'unité imaginaire.

**16.** Procédé selon la revendication 13, dans lequel :

- le contrôleur (12) décode dans les signaux reçus une donnée correspondant à l'estimation de la fonction de transfert ($A(\omega)$) du canal de propagation entre l'antenne (32) et le récepteur (20), et
- la caractéristique du récepteur est déterminée à partir d'une troisième grandeur de calcul ($m(\omega)$) suivante :

$$m(\omega) = \frac{dA}{d\omega} A^*(\omega)$$

où

$m(\omega)$ est la troisième grandeur de calcul,
$A(\omega)$ est la fonction de transfert en fonction de la pulsation fréquentielle $\omega$,
$d()/d\omega$ est l'opérateur de dérivé par rapport à la pulsation fréquentielle, et
$()^*$ est l'opérateur de conjugaison des nombres complexe.

**17.** Procédé selon l'une des revendications 14 à 16, dans lequel la caractéristique du récepteur est déterminée à partir d'une moyenne ou d'un produit scalaire ou d'une combinaison ou d'une fonction de plusieurs grandeurs de calcul, lesdites grandeurs de calcul étant des premières grandeurs de calcul ($\psi_1$) ou des deuxièmes grandeurs de calcul ($\psi_2$) ou des troisièmes grandeurs de calcul ($m(\omega)$) .

18. **Système (1) de détermination d'une caractéristique** d'un récepteur dans un milieu, ladite caractéristique étant une information de détection et/ou une information d'identité et/ou une information de localisation dudit objet, ledit système comprenant :

   - une antenne (32) adaptée pour émettre une onde primaire dans le milieu, et pour recevoir une onde secondaire résultante de l'onde primaire et de la présence du récepteur dans le milieu,
   - une pluralité d'éléments réglables ayant une impédance qui peut être modifiée pour modifier la manière dont l'onde primaire est émise et/ou réfléchie et/ou transmise, et
   - un contrôleur (12) relié à l'antenne et aux éléments réglables et qui contrôle l'état des éléments réglables à partir d'un jeu de paramètres, et

   le récepteur (20) étant adapté pour émettre activement l'onde secondaire en réponse de la réception de l'onde primaire,
   ledit système **étant caractérisé en ce que** le système (1) :

   a) fait émettre une onde primaire par l'antenne,
   b) contrôle les éléments réglables durant au moins une période de sondage, successivement avec une pluralité de jeux de paramètres, chaque jeu de paramètres étant différent du précédent, afin de modifier la propagation de l'onde primaire et/ou de l'onde secondaire pendant l'émission et/ou la réception des ondes par l'antenne,
   c) enregistre des signaux reçus par l'antenne pendant ladite période de sondage, et
   d) détermine la caractéristique du récepteur dans le milieu à partir des signaux reçus pour chaque jeu de paramètres.

19. Système selon la revendication 18, dans lequel les éléments réglables appartiennent à une surface (11) ou une pluralité de surfaces.

20. Système selon la revendication 18, dans lequel le récepteur réagit à l'onde primaire en émettant une onde secondaire incluant une donnée mémorisée dans le récepteur, et le contrôleur traite les signaux reçus pour décoder ladite donnée et pour déterminer ladite caractéristique.

21. Système selon la revendication 18, dans lequel le récepteur est un objet connecté à un réseau informatique sans fil, et l'onde primaire et l'onde secondaire sont des émissions et/ou réceptions du réseau sans fil.

22. Système selon la revendication 21, dans lequel le réseau informatique est un réseau de type Bluetooth, WiFi, GSM.

23. Système selon la revendication 18, dans lequel le récepteur est un badge de type RFID, et l'onde secondaire comprend au moins une donnée d'identification dudit récepteur.

24. Système selon l'une des revendications 18 à 23, dans lequel les éléments réglables sont des éléments indépendants de l'antenne et qui modifient la manière dont l'onde primaire est réfléchie et/ou transmise.

25. Système selon la revendication 18, dans lequel les éléments réglables sont des diffuseurs à proximité de l'antenne et qui modifient la manière dont l'onde primaire est émise et/ou reçue par ladite antenne.

26. Système selon la revendication 18, dans lequel les éléments réglables sont des éléments d'antenne de l'antenne et qui sont commandés avec une phase réglable.

27. Système selon l'une des revendications 18 à 26, dans lequel les éléments réglables sont sur un dispositif mobile dans le milieu.


**Patentansprüche**

1. **Verfahren zur Bestimmung eines Merkmals eines Empfängers (20) in einem** Medium, wobei das Merkmal eine Erfassungsinformation und/oder eine Identitätsinformation und/oder eine Lokalisierungsinformation des Empfängers (20) ist, wobei das Verfahren von einem System (1) durchgeführt wird, umfassend:

- eine Antenne (32), die dazu ausgebildet ist, eine Primärwelle in das Medium auszusenden und eine Sekundärwelle zu empfangen, die sich aus der Primärwelle und der Anwesenheit des Empfängers in dem Medium ergibt,
- eine Mehrzahl von regelbaren Elementen mit einer Impedanz, die geändert werden kann, um die Art und Weise zu ändern, wie die Primärwelle ausgesendet und/oder reflektiert und/oder übertragen wird, und
- eine Steuerung (12), die mit der Antenne und den regelbaren Elementen verbunden ist und den Zustand der regelbaren Elemente anhand eines Satzes von Parametern steuert, und

wobei der Empfänger (20) dazu ausgebildet ist, die Sekundärwelle als Reaktion auf den Empfang der Primärwelle aktiv auszusenden,
wobei das Verfahren **dadurch gekennzeichnet ist, dass** das System:

a) die Antenne dazu veranlasst, eine Primärwelle auszusenden,
b) die regelbaren Elemente während wenigstens einer Sondierungsperiode nacheinander mit einer Mehrzahl von Parametersätzen kontrolliert, wobei sich jeder Parametersatz vom vorhergehenden unterscheidet, um die Ausbreitung der Primärwelle und/oder der Sekundärwelle während des Sendens und/oder des Empfangs der Wellen durch die Antenne zu verändern,
c) Signale aufzeichnet, die von der Antenne während der Sondierungsperiode empfangen wurden, und
d) aus den empfangenen Signalen für jeden Satz von Parametern das Merkmal des Empfängers in der Umgebung bestimmt.

2. Verfahren nach Anspruch 1, wobei die Steuerung (12) einen Mittelwert der empfangenen Signale oder einen Mittelwert von aus den empfangenen Signalen berechneten Quantitäten berechnet, um das Merkmal des Empfängers zu bestimmen.

3. Verfahren nach Anspruch 1 oder 2, wobei die Mehrzahl von Parametersätzen eine Zufallsfolge ist.

4. Verfahren nach Anspruch 1 oder 2, wobei die Mehrzahl von Parametersätzen eine voraufgezeichnete Sequenz ist.

5. Verfahren nach Anspruch 1, wobei die Mehrzahl von Parametersätzen eine Sequenz ist, die eine geringe Anzahl der regelbaren Elemente auf einmal ändert, wobei die geringe Anzahl weniger als 10% der regelbaren Elemente des Systems beträgt, und die Steuerung das Merkmal aus den aufgezeichneten Signalen mit der größten Amplitude und der Kenntnis der Positionen der regelbaren Elemente, die diese größte Amplitude verursacht haben, bestimmt.

6. Verfahren nach einem der Ansprüche 1 bis 5, wobei die Steuerung der regelbaren Elemente mit einer Kadenz durchgeführt wird, die höher als eine Grenzkadenz ist, z.B. 10 pro Sekunde.

7. Verfahren nach einem der Ansprüche 1 bis 6, wobei die Steuerung die empfangenen Signale für die Mehrzahl von Parametersätzen mit einer gespeicherten Datenbank von vorbestimmten Signalen vergleicht, wobei die Datenbank das Merkmal des Empfängers in Verbindung mit den vorbestimmten Signalen umfasst.

8. Verfahren nach Anspruch 7, wobei die vorbestimmten Signale eine einzige Frequenz umfassen.

9. Verfahren nach Anspruch 1 bis 7, wobei das System ferner Referenzempfänger mit vorbestimmtem Merkmal umfasst, und wobei die Steuerung die empfangenen Signale für die Mehrzahl von Parametersätzen mit einer gespeicherten Datenbank von vorbestimmten Signalen für diese Referenzempfänger vergleicht, wobei die Datenbank das vorbestimmte Merkmal jedes Referenzempfängers in Verbindung mit dem vorbestimmten Signal für diesen Referenzempfänger umfasst, und das Merkmal des Empfängers bestimmt wird, indem der Vergleich der höchsten Wahrscheinlichkeit zwischen den empfangenen Signalen und den vorbestimmten Signalen der Referenzempfänger bestimmt wird.

10. Verfahren nach Anspruch 9, wobei die vorbestimmten Signale der Referenzempfänger in der Datenbank periodisch aktualisiert werden.

11. Verfahren nach Anspruch 9 oder 10, wobei die Steuerung (12) eine Logik zur Steuerung der Antenne (32) und/oder der regelbaren Elemente umfasst, so dass die Primärwelle um einen oder mehrere Referenzempfänger fokussiert wird, und die Primärwelle um den Referenzempfänger fokussiert wird, bevor die Schritte a) bis d) ausgeführt werden.

**12.** Verfahren nach Anspruch 9, wobei die von den Referenzempfängern empfangenen Signale periodisch mit der Mehrzahl von Parametersätzen gemessen werden und nur die am besten übereinstimmenden empfangenen Signale in der Datenbank gespeichert werden.

**13.** Verfahren nach einem der Ansprüche 1 bis 7, wobei die Steuerung (12) wenigstens einen vom Empfänger (20) in jedem der empfangenen Signale enthaltenen Datenwert verwendet, wobei dieser Datenwert dem Pegel und/oder der Qualität und/oder der Schätzung der Übertragungsfunktion des Ausbreitungskanals zwischen der Antenne (32) und dem Empfänger (20) entspricht.

**14.** Verfahren nach Anspruch 13, wobei:

- die Mehrzahl von Parametersätzen für die regelbaren Elemente einen ersten Parametersatz und einen zweiten Parametersatz umfasst, wobei der zweite Parametersatz einer um $\pi$ Radiant gegenüber dem ersten Parametersatz versetzten Phase entspricht,
- die Steuerung (12) aus den empfangenen Signalen einen ersten Datenwert ($I_1$), der dem ersten Satz von Parametern entspricht, und einen zweiten Datenwert ($I_2$), der dem zweiten Satz von Parametern entspricht, dekodiert, wobei der erste und der zweite Datenwert dem Pegel der vom Empfänger empfangenen Welle entsprechen, und
- das Merkmal des Empfängers aus einer ersten Rechengröße ($\psi_1$) bestimmt wird, die die Differenz zwischen dem zweiten Datenwert und dem ersten Datenwert ist, d. h.:

$$\psi_1 = (I_2 - I_1)$$

wobei gilt:

$\psi_1$ ist die erste Rechengröße, und
$I_1$ und $I_2$ sind der erste Datenwert beziehungsweise der zweite Datenwert.

**15.** Verfahren nach Anspruch 13, wobei:

- die Mehrzahl von Parametersätzen für die regelbaren Elemente einen ersten Parametersatz, einen zweiten Parametersatz, einen dritten Parametersatz, einen vierten Parametersatz umfasst, wobei der zweite Parametersatz einer um $2\pi$ Radiant gegenüber dem ersten Parametersatz verschobenen Phase entspricht, der dritte Parametersatz einer um $\pi$ Radiant gegenüber dem ersten Parametersatz verschobenen Phase entspricht und der vierte Parametersatz einer um 3. $\pi/2$ Radiant gegenüber dem ersten Parametersatz verschobenen Phase entspricht,
- die Steuerung (12) aus den empfangenen Signalen einen ersten Datenwert ($I_1$), der dem ersten Parametersatz entspricht, einen zweiten Datenwert ($I_2$), der dem zweiten Parametersatz entspricht, einen dritten Datenwert ($I_3$), der dem dritten Parametersatz entspricht, und einen vierten Datenwert ($I_4$), der dem vierten Parametersatz entspricht, dekodiert, wobei der erste, zweite, dritte und vierte Datenwert dem vom Empfänger empfangenen Wellenpegel entspricht, und
- das Merkmal des Empfängers aus einer folgenden zweiten Rechengröße ($\psi_2$) bestimmt wird:

$$\psi_2 = (I_3 - I_1) + i(I_4 - I_2)$$

wobei gilt:

$\psi_2$ ist die zweite Rechengröße, und
$I_1$, $I_2$, $I_3$ und $I_4$ sind jeweils der erste Datenwert, der zweite Datenwert, der
dritte Datenwert und der vierte Datenwert, und
$i$ ist die imaginäre Einheitszahl.

**16.** Verfahren nach Anspruch 13, wobei:

- die Steuerung (12) in den empfangenen Signalen einen Datenwert dekodiert, der der Schätzung der Übertragungsfunktion (A(ω)) des Ausbreitungskanals zwischen der Antenne (32) und dem Empfänger (20) entspricht, und
- das Merkmal des Empfängers aus einer folgenden dritten Rechengröße (m(ω)) bestimmt wird:

$$m(\omega) = \frac{dA}{d\omega}A^*(\omega)$$

wobei gilt:

m(ω) ist die dritte Rechengröße,
A(ω) ist die Übertragungsfunktion in Abhängigkeit von der Frequenzpulsation ω,
d()/dω ist der Ableitungsoperator in Bezug auf die Frequenzpulsation, und
()* ist der Konjugationsoperator für komplexe Zahlen.

17. Verfahren nach einem der Ansprüche 14 bis 16, wobei das Merkmal des Empfängers aus einem Mittelwert oder einem Skalarprodukt oder einer Kombination oder einer Funktion mehrerer Rechengrößen bestimmt wird, wobei die Rechengrößen erste Rechengrößen ($\psi_1$) oder zweite Rechengrößen ($\psi_2$) oder dritte Rechengrößen (m(ω)) sind.

18. System (1) zur Bestimmung eines Merkmals eines Empfängers in einem Medium, wobei das Merkmal eine Erfassungsinformation und/oder eine Identitätsinformation und/oder eine Lokalisierungsinformation des Objekts ist, wobei das System umfasst:

- eine Antenne (32), die dazu ausgebildet ist, eine Primärwelle in das Medium auszusenden und eine Sekundärwelle zu empfangen, die sich aus der Primärwelle und der Anwesenheit des Empfängers in dem Medium ergibt,
- eine Mehrzahl von regelbaren Elementen mit einer Impedanz, die geändert werden kann, um die Art und Weise zu ändern, wie die Primärwelle ausgesendet und/oder reflektiert und/oder übertragen wird, und
- eine Steuerung (12), die mit der Antenne und den regelbaren Elementen verbunden ist und den Zustand der regelbaren Elemente anhand eines Satzes von Parametern steuert, und

wobei der Empfänger (20) dazu ausgebildet ist, die Sekundärwelle als Reaktion auf den Empfang der Primärwelle aktiv auszusenden,
wobei das System **dadurch gekennzeichnet ist, dass** das System (1):

a) die Antenne dazu veranlasst, eine Primärwelle auszusenden,
b) die regelbaren Elemente während wenigstens einer Sondierungsperiode nacheinander mit einer Mehrzahl von Parametersätzen steuert, wobei sich jeder Parametersatz vom vorhergehenden unterscheidet, um die Ausbreitung der Primärwelle und/oder der Sekundärwelle während des Sendens und/oder des Empfangs der Wellen durch die Antenne zu verändern,
c) Signale aufzeichnet, die von der Antenne während der genannten Sondierungsperiode empfangen wurden, und
d) aus den empfangenen Signalen für jeden Satz von Parametern die Charakteristik des Empfängers in der Umgebung bestimmt.

19. System nach Anspruch 18, wobei die regelbaren Elemente zu einer Oberfläche (11) oder einer Mehrzahl von Oberflächen gehören.

20. System nach Anspruch 18, wobei der Empfänger auf die Primärwelle reagiert, indem er eine Sekundärwelle aussendet, die einen im Empfänger gespeicherten Datenwert enthält, und die Steuerung die empfangenen Signale verarbeitet, um den Datenwert zu dekodieren und das Merkmal zu bestimmen.

21. System nach Anspruch 18, wobei der Empfänger ein Objekt ist, das mit einem drahtlosen Computernetzwerk verbunden ist, und die Primärwelle und die Sekundärwelle Sendungen und/oder Empfänge des drahtlosen Netzwerks sind.

22. System nach Anspruch 21, wobei das Computernetzwerk ein Netzwerk vom Typ Bluetooth, WiFi, GSM ist.

23. System nach Anspruch 18, wobei der Empfänger ein RFID-Badge ist und die Sekundärwelle wenigstens einen Identifikationsdatenwert des Empfängers umfasst.

24. System nach einem der Ansprüche 18 bis 23, wobei die regelbaren Elemente von der Antenne unabhängige Elemente sind, die die Art und Weise verändern, in der die Primärwelle reflektiert und/oder gesendet wird.

25. System nach Anspruch 18, wobei die regelbaren Elemente Diffusoren in der Nähe der Antenne sind, die die Art und Weise verändern, in der die Primärwelle von der Antenne ausgesendet und/oder erfasst wird.

26. System nach Anspruch 18, wobei die regelbaren Elemente Antennenelemente der Antenne sind, die mit einer regelbaren Phase gesteuert werden.

27. System nach einem der Ansprüche 18 bis 26, wobei sich die regelbaren Elemente auf einer im Medium beweglichen Vorrichtung befinden.

**Claims**

1. **Method for determining** a **characteristic** of a receiver (20) in a medium, said characteristic being detection information and/or identity information and/or location information of said receiver (20), said method being implemented by a system (1) comprising:

   - an antenna (32) capable of emitting a primary wave in the medium, and of receiving a secondary wave resulting from the primary wave and from the presence of the receiver in the medium,
   - a plurality of adjustable elements having an impedance which can be modified to change the manner in which the primary wave is emitted and/or reflected and/or transmitted, and
   - a controller (12) connected to the antenna and to the adjustable elements and which controls the state of the adjustable elements based on a set of parameters, and

   the receiver (20) being capable of actively emitting the secondary wave in response to receiving the primary wave, said method **being characterized in that** the system:

   a) causes the antenna to emit a primary wave,
   b) controls the adjustable elements during at least one probing period, successively with a plurality of sets of parameters, each set of parameters being different from the previous one, in order to modify the propagation of the primary wave and/or secondary wave during the emission and/or reception of waves by the antenna,
   c) stores signals received by the antenna during said probing period, and
   d) determines the characteristic of the receiver in the medium based on the signals received for each set of parameters.

2. Method according to claim 1, wherein the controller (12) calculates an average of the received signals or an average of values calculated from the received signals, in order to determine the characteristic of the receiver.

3. Method according to claim 1 or claim 2, wherein the plurality of sets of parameters is a random sequence.

4. Method according to claim 1 or claim 2, wherein the plurality of sets of parameters is a previously saved sequence.

5. Method according to claim 1, wherein the plurality of sets of parameters is a sequence which changes a small number of the adjustable elements at a time, said small number being less than 10% of the adjustable elements of the system, and the controller determines the characteristic based on the saved signals of higher amplitude, and on knowledge of the positions of the adjustable elements which caused this higher amplitude.

6. Method according to any one of claims 1 to 5, wherein the controlling of the adjustable elements is carried out at a rate greater than a threshold rate, for example 10 per second.

7. Method according to any one of claims 1 to 6, wherein the controller compares the signals received for the plurality of sets of parameters with a stored database of predetermined signals, said database including the characteristic of the receiver in association with the predetermined signals.

8. Method according to claim 7, wherein the predetermined signals comprise a single frequency.

9. Method according to claim 1 to 7, wherein the system further comprises reference receivers of a predetermined characteristic, and wherein the controller compares the signals received for the plurality of sets of parameters with a stored database of predetermined signals for those reference receivers, said database including the predetermined characteristic of each reference receiver in association with the predetermined signal for that reference receiver, and the characteristic of the receiver is determined by determining the comparison of highest likelihood between the signals received and the predetermined signals of the reference receivers.

10. Method according to claim 9, wherein the predetermined signals of the reference receivers of the database are periodically updated.

11. Method according to claim 9 or claim 10, wherein the controller (12) comprises control logic for the antenna (32) and/or adjustable elements so that the primary wave is focused around one or more reference receivers, and the primary wave is focused around said reference receiver before performing steps a) to d).

12. Method according to claim 9, wherein the signals received from the reference receivers are periodically measured with the plurality of sets of parameters, and only the most coherent received signals are kept in the database.

13. Method according to any one of claims 1 to 7, wherein the controller (12) uses at least one data item included by the receiver (20) in each of the received signals, said data item corresponding to the level and/or to the quality and/or to the estimate of the propagation channel transfer function between the antenna (32) and the receiver (20).

14. Method according to claim 13, wherein:

- the plurality of sets of parameters for the adjustable elements comprises a first set of parameters and a second set of parameters, the second set of parameters corresponding to a phase shift of $\pi$ radians relative to the first set of parameters,
- the controller (12) decodes, in the received signals, a first data item ($I_1$) corresponding to the first set of parameters and a second data item ($I_2$) corresponding to the second set of parameters, the first and the second data items corresponding to the level of the wave received by the receiver, and
- the characteristic of the receiver is determined from a first calculated value ($\psi\mathbf{1}$) which is the difference between the second data item and the first data item, in other words:

$$\psi_1 = (I_2 - I_1)$$

where

$\psi_1$ is the first calculated value, and
$I_1$ and $I_2$ are respectively the first data item and the second data item.

15. Method according to claim 13, wherein:

- the plurality of sets of parameters for the adjustable elements comprises a first set of parameters, a second set of parameters, a third set of parameters, and a fourth set of parameters, the second set of parameters corresponding to a phase shift of $\pi/\mathbf{2}$ radians relative to the first set of parameters, the third set of parameters corresponding to a phase shift of $\pi$ radians relative to the first set of parameters, and the fourth set of parameters corresponding to a phase shift of 3. $\pi/\mathbf{2}$ radians relative to the first set of parameters,
- the controller (12) decodes, in the received signals, a first data item ($I_1$) corresponding to the first set of parameters, a second data item ($I_2$) corresponding to the second set of parameters, a third data item ($I_3$) corresponding to the third set of parameters, and a fourth data item ($I_4$) corresponding to the fourth set of parameters, the first, second, third, and fourth data items corresponding to the level of the wave received by the receiver, and
- the characteristic of the receiver is determined from a second calculated value ($\psi_2$) as follows:

$$\psi_2 = (I_3 - I_1) + i(I_4 - I_2)$$

where

$\psi_2$ is the first calculated value, and
$I_1$, $I_2$, $I_3$ and $I_4$ are respectively the first data item, the second data item, the third data item, and the fourth data item, and
i is the imaginary unit.

**16.** Method according to claim 13, wherein:

- the controller (12) decodes, in the received signals, a data item corresponding to the estimate of the propagation channel transfer function ($A(\omega)$) between the antenna (32) and the receiver (20), and
- the characteristic of the receiver is determined from a third calculated value ($m(\omega)$) as follows:

$$m(\omega) = \frac{dA}{d\omega} A^*(\omega)$$

where

$m(\omega)$ is the third calculated value,
$A(\omega)$ is the transfer function as a function of the angular frequency $\omega$,
$d()/d\omega$ is the derivative operator with respect to the angular frequency, and
()* is the complex conjugate operator.

**17.** Method according to one of claims 14 to 16, wherein the characteristic of the receiver is determined from an average or a dot product or a combination or a function of several calculated amounts, said calculated amounts being first calculated amounts ($\psi_1$) or second calculated amounts ($\psi_2$) or third calculated amounts ($m(\omega)$).

**18. System (1) for determining a characteristic** of a receiver in a medium, said characteristic being detection information and/or identity information and/or location information of said object, said system comprising:

- an antenna (32) capable of emitting a primary wave in the medium, and of receiving a secondary wave resulting from the primary wave and from the presence of the receiver in the medium,
- a plurality of adjustable elements having an impedance which can be modified to change the manner in which the primary wave is emitted and/or reflected and/or transmitted, and
- a controller (12) connected to the antenna and to the adjustable elements and which controls the state of the adjustable elements based on a set of parameters, and

the receiver (20) being capable of actively emitting the secondary wave in response to receiving the primary wave, said system **being characterized in that** the system (1):

a) causes the antenna to emit a primary wave,
b) controls the adjustable elements during at least one probing period, successively with a plurality of sets of parameters, each set of parameters being different from the previous one, in order to modify the propagation of the primary wave and/or secondary wave during the emission and/or reception of waves by the antenna,
c) stores signals received by the antenna during said probing period, and
d) determines the characteristic of the receiver in the medium based on the signals received for each set of parameters.

**19.** System according to claim 18, wherein the adjustable elements are part of a surface (11) or a plurality of surfaces.

**20.** System according to claim 18, wherein the receiver responds to the primary wave by emitting a secondary wave including a data item stored in the receiver, and the controller processes the received signals to decode said data item and determine said characteristic.

**21.** System according to claim 18, wherein the receiver is an object connected to a wireless computer network, and the primary wave and secondary wave are emissions and/or receptions of the wireless network.

22. System according to claim 21, wherein the computer network is a Bluetooth, WiFi, or GSM type of network.

23. System according to claim 18, wherein the receiver is an RFID type badge, and the secondary wave comprises at least one data item identifying said receiver.

24. System according to one of claims 18 to 23, wherein the adjustable elements are elements independent of the antenna and which change the manner in which the primary wave is reflected and/or transmitted.

25. System according to claim 18, wherein the adjustable elements are diffusers near the antenna and which change the manner in which the primary wave is emitted and/or received by said antenna.

26. System according to claim 18, wherein the adjustable elements are antenna elements of the antenna and which are controlled with an adjustable phase.

27. System according to one of claims 18 to 26, wherein the adjustable elements are on a mobile device in the medium.

FIG. 1

FIG. 2

**EP 3 803 452 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6538621 B
- WO 2015039769 A

- WO 2008007024 A